# EUROPEAN PATENT APPLICATION

(11) **EP 2 199 232 A1**
(43) Date of publication of application: **23.06.2010**
(21) Application number: 08740704.5
(22) Date of filing: 21.04.2008
(51) Int. Cl.: B65G 17/12, A47G 23/08

(54) **CONVEYING DEVICE**

(30) Priority: 10.09.2007 JP 2007234752
(71) Applicant: Ishino Seisakusyo Co., Ltd., Ishikawa 921-8025 (JP)
(72) Inventor: ISHINO, Haruki, Kanazawa-shi Ishikawa 921-8025 (JP); SAKAJIRI, Satoshi, Kanazawa-shi Ishikawa 921-8025 (JP); TAKASHIMA, Ikuo, Kanazawa-shi Ishikawa 921-8025 (JP); NAKAYAMA, Eiji, Kanazawa-shi Ishikawa 921-8025 (JP); TOKUDA, Yasuhiro, Kanazawa-shi Ishikawa 921-8025 (JP); KITAMURA, Tetsuji, Kanazawa-shi Ishikawa 921-8025 (JP)
(74) Representative: Staudt, Hans-Peter
(86) International application number: PCT/JP2008/057659
(87) International publication number: WO 2009/034739

(57) **Abstract**

To provide a conveying device that has a simple structure and can stably travel a traveling body on which food and drink articles are placed. The conveying device comprises a conveying drive part (13) extended on the side of and along a traveling path (12) for traveling the traveling body (11) on which food and drink articles are placed, a moving body (50) moved when the conveying drive part (13) is driven, and connection means (51, 52) for connecting the moving body (50) to the traveling body (11). The connection means (51, 52) are so constituted that the connected state between the mobile body (50) and the traveling body (11) can be released when the traveling of the traveling body (11) is obstructed.

## Description

### Technical Field

The present invention relates to a conveying device for conveying foods and drinks by moving a moving body on which foods and drinks, such as sushi, can be placed.

### Background Technology

As conventional conveying devices for conveying dishes on which foods and drinks are placed in restaurants, for example kaiten-sushi shops, crescent chain conveyors where a great number of studs that are in crescent form as viewed from the top are attached to a chain which is a continuously moving conveying means in such a manner as to be rotatable are generally known.

Meanwhile, conveying devices that don't use a crescent chain conveyor, where trays on which foods and drinks can be placed travel along a path on wheels and magnets are provided at predetermined intervals in such a manner as to be continuously movable by means of a drive chain beneath the path so that the attraction between magnetic bodies provided on the above described trays and the magnets along the drive chain makes it so that the trays to move and convey foods and drinks have also come into use in recent years (see for example Patent Document 1).

Patent Document 1: Japanese Unexamined Patent Publication 2004-16464 (page 1, FIG. 1).

### Disclosure of the Invention

### Problem to Be Solved by the Invention

In the above described conveying device described in Patent Document 1, however, the drive chain for moving trays is provided beneath the path, and therefore, it is necessary to use magnets or the like in order to convey the drive force of the drive chain to the trays through the path, and thus, a problem arises, such that the trays move unstably.

In addition, though it is also possible to connect the drive chain to the trays by means of connection members, in this case it is necessary to create a slit through for the convection members, which makes for poor appearance.

The present invention is provided in order to solve these problems, and an object of the invention is to provide a conveying device having a simple structure which can stably move a moving body on which foods and drinks can be placed.

### Means for Solving Problem

In order to solve the above described problems, the conveying device according to Claim 1 of the present invention is a conveying device for moving a moving body on which foods and drinks can be placed and conveying foods and drinks having;
a drive portion that runs along the side of a path along which the above described moving body travels;
a movable body that moves when driven by the above described drive portion; and
a connection means for connecting the above described movable body to the above described moving body, **characterized in that**
the above described connection means is formed so that the connection between the above described movable body and the above described moving body can be broken when the above described moving body is interfered with.
According to these characteristics, the movable body moves when driven by the drive portion, so that the moving body travels, and the moving body and the movable body can be connected directly without the path in between, and therefore, it is not necessary to create a slit along the path, and the moving body can travel stably. In addition, in the case where the moving body is interfered with, for example the moving body is caught by something that dropped on the path or held by someone's hand, the connection between the movable body and the moving body is broken, and therefore, the load is not heavy to the drive portion, which can thus be prevented from being damaged.

The conveying device according to Claim 2 of the present invention is the conveying device according to Claim 1, **characterized in that**
the above described connection means includes a magnetic body for connecting the above described movable body to the above described moving body by means of magnetic force.
According to these characteristics, connection and disconnection are possible with a simple mechanism.

The conveying device according to Claim 3 of the present invention is the conveying device according to Claim 2, **characterized in that**
the above described moving body comprises a drive control means for controlling the drive of the above described drive portion so that the above described moving body moves back and forth along the above described path, and
the surface for connection on the above described connection means is approximately parallel to the direction in which the above described moving body moves.
According to these characteristics, when the connection of the moving body is broken, the moving body can be prevented from being dragged as a result of interference between the surfaces for connection, and the moving body can simply move along the path when the movable body and the moving body are reconnected.

The conveying device according to Claim 4 of the present invention is the conveying device according to Claim 3, **characterized in that**
a surface that inclines in the direction of the width of the above described path is provided to the side of the above described surface for connection in the direction in which the moving body moves.
According to these characteristics, the moving body can simply move along the path, so that the surface for connection is guided to the point of connection along the inclining surface when the movable body and the moving body are reconnected.

The conveying device according to Claim 5 of the present invention is the conveying device according to any of Claims 1 to 4, **characterized in that** a guide portion for guiding the above described moving body in a certain direction is provided along the above described path.
According to these characteristics, the moving body moves stably, and in addition, it becomes difficult for the moving body to derail from the path when the connection is broken, and therefore, the system is safe.

### Brief Description of the Drawings.

FIG. 1 is a plan diagram showing a continuous foods and drinks conveying device as those installed in restaurants;
FIG. 2 is a perspective diagram showing the conveying device for preordered items according to an embodiment of the present invention and the main portion of a continuous foods and drinks conveying device;
FIG. 3 is a front diagram showing the base as viewed from the customer's seat;
FIG. 4 is a cross sectional diagram along A-A in FIG. 3;
FIG. 5A is a diagram showing a connection member, and FIG. 5B is a plan diagram showing a moving body;
FIG. 6A is a schematic diagram showing how the moving body moves, and FIG. 6B is a schematic diagram showing how the moving body may be interfered with;
FIG. 7A is a schematic diagram showing how the moving body returns, and FIG. 7B is a schematic diagram showing how the moving body is connected;
FIG. 8 is a cross sectional diagram showing a modification of the arrangement of magnets; and
FIG. 9 is a diagram showing an enlargement of the main portion of a modification of the connection means.

### Description of Symbols

- 2: kitchen area
- 3: front area
- 4: continuous foods and drinks conveying device
- 5: crescent chain conveyor (continuous path)
- 6: customers' seats
- 10: conveying device for preordered items (conveying device)
- 11: conveyance tray (moving body)
- 12: path
- 13: drive unit (drive portion)
- 15: conveyor belt (drive portion)
- 50: movable body
- 51: magnet on movable body side (connection means)
- 52: magnet on tray side (connection means)
- 51a, 52a: sides (surfaces for connection)

### Best Mode for Carrying Out the Invention

The best mode for carrying out the present invention is described below on the basis of the conveying device according to an embodiment. Embodiments

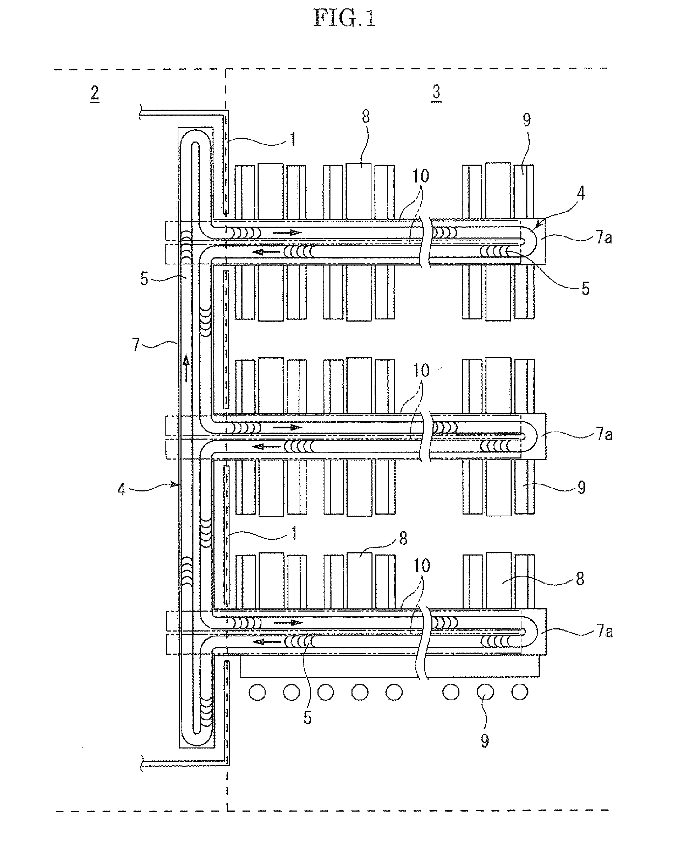

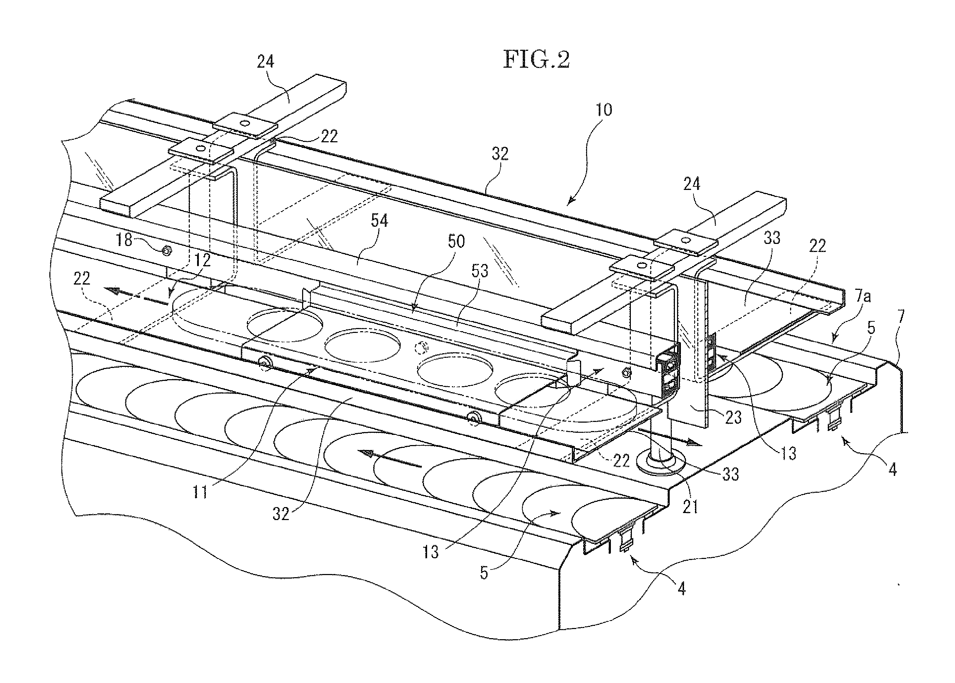

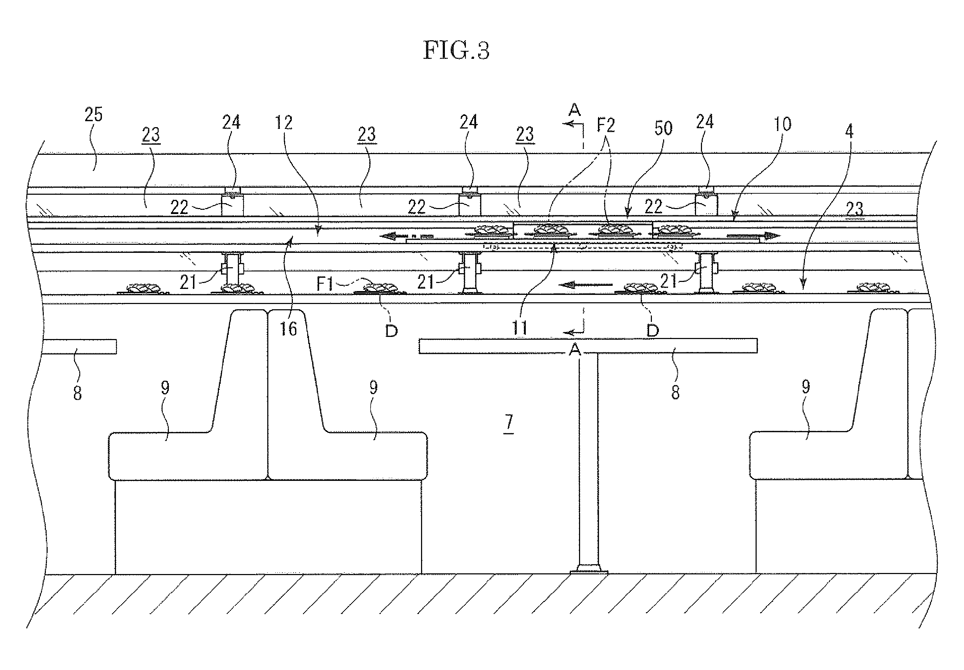

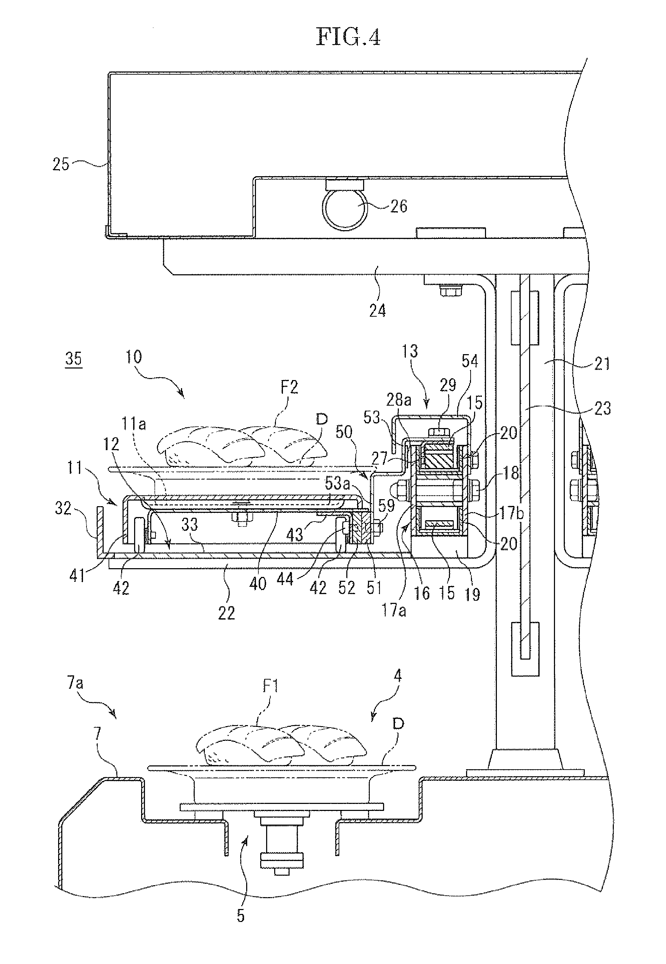

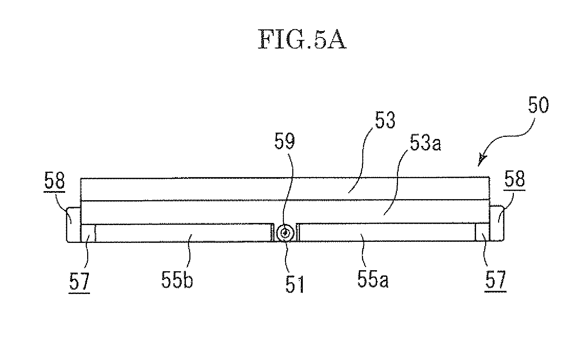

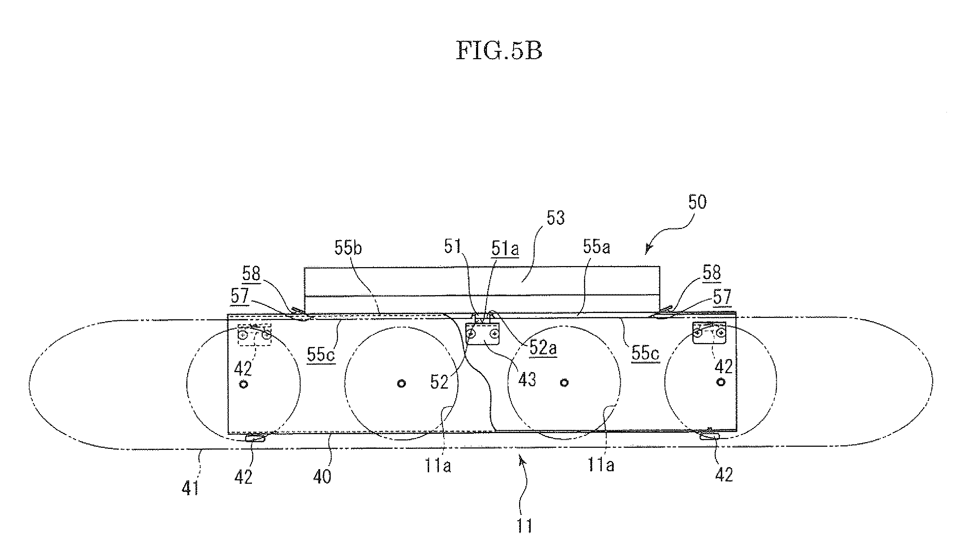

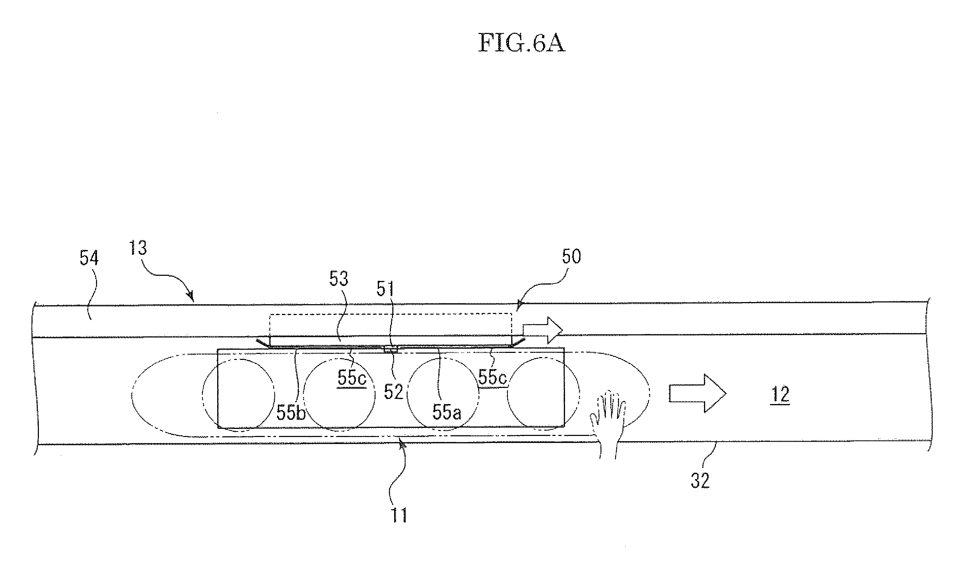

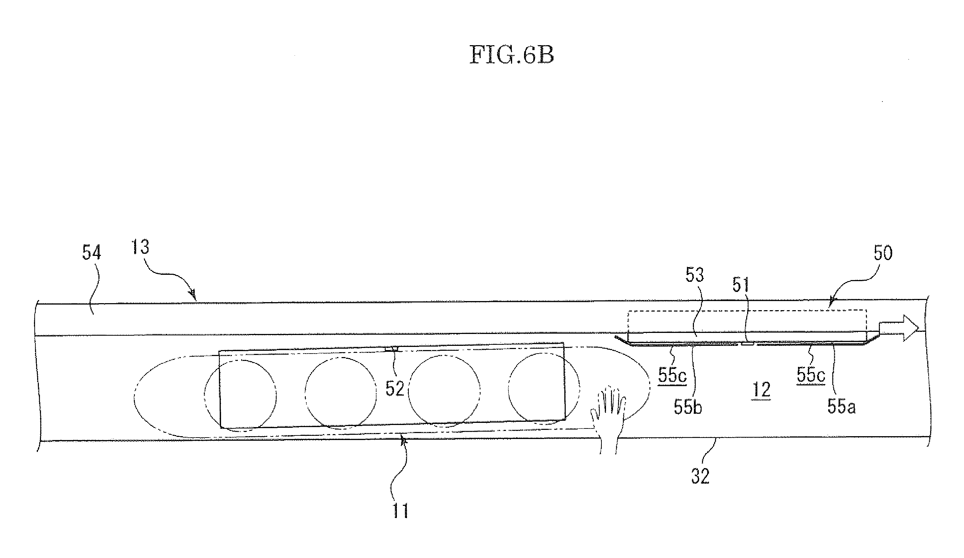

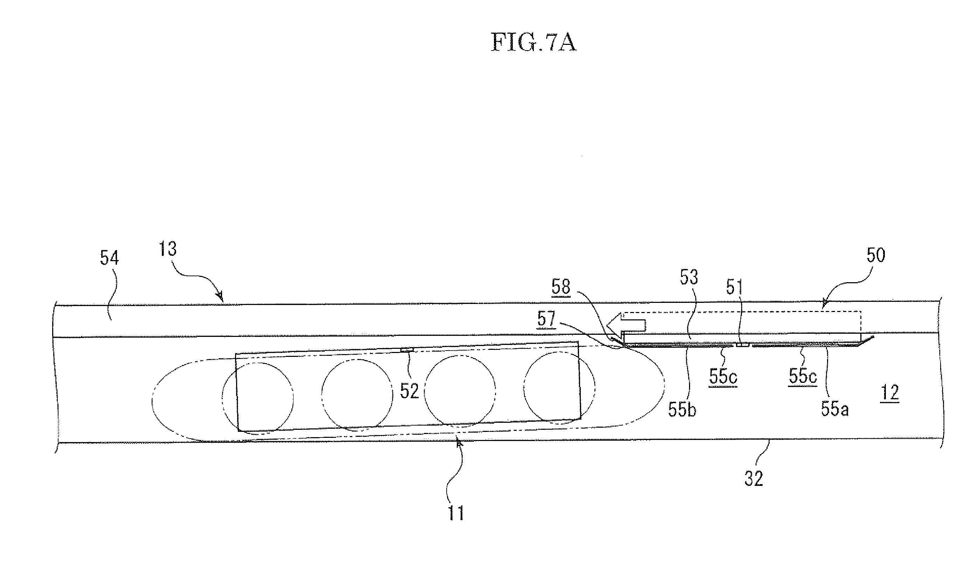

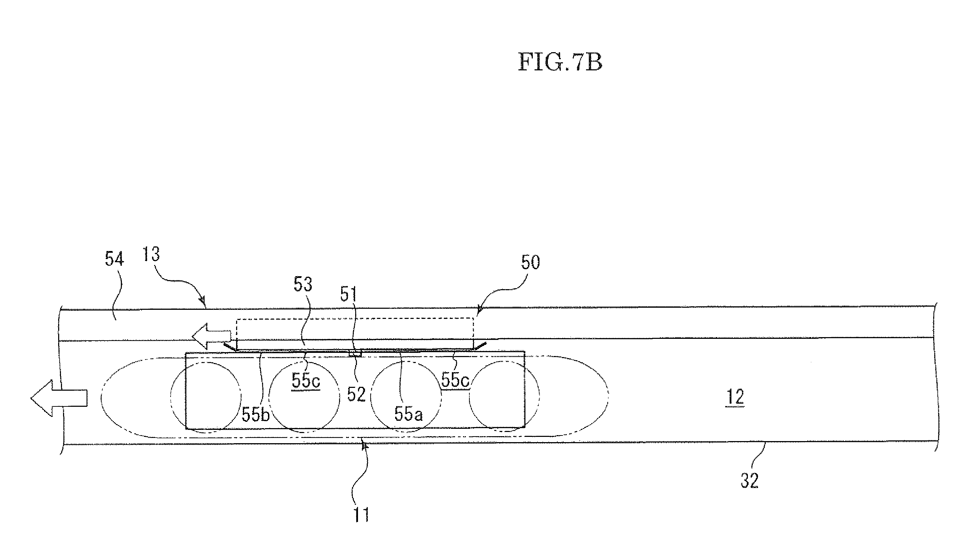

An embodiment of the present invention is described on the basis of the drawings. First, FIG. 1 is a plan diagram showing a continuous foods and drinks conveying device installed in a restaurant. FIG. 2 is a perspective diagram showing the conveying device for preordered items according to the embodiment of the present invention and the main portion of a continuous foods and drinks conveying device. FIG. 3 is a front diagram showing the base as viewed from the customer's seat. FIG. 4 is a cross sectional diagram along A-A in FIG. 3. FIG. 5A is a diagram showing a connection member, and FIG. 5B is a plan diagram showing a moving body. FIG. 6A is a schematic diagram showing how the moving body moves, and FIG. 6B is a schematic diagram showing how the moving body may be interfered with. FIG. 7A is a schematic diagram showing how the moving body returns, and FIG. 7B is a schematic diagram showing how the moving body is connected. Here, in the hollowing description, the front-rear direction is the direction in which the conveyance trays move, and the left-right direction is the width of the path.

First, FIG. 1 shows the arrangement of the base 7 on which the conveying device for preordered items 10 according to the embodiment of the present invention and a continuous foods and drinks conveying device 4 as those in restaurants are provided. The restaurant is divided into a kitchen area 2 and a front area by a partition 1. The base 7 is formed in approximately E shape in a plan view, with three straight paths 7a running toward the front area 3 from the kitchen area 2 and a number of tables 8 are located along the paths so as to surround the straight paths 7a with seats 9 around the tables 8.

A continuous crescent chain conveyor 5 made up of a number of platforms in crescent form as viewed from the top that are connected by a chain (see FIG. 2) is provided on top of the base 7 so as to be continuously movable through the kitchen area 2 and the front area 3, and this crescent chain conveyor 5 forms a continuous path in approximately E shape as viewed from the top.

In addition, the path for preordered items for the conveying device for preordered items 10 according to the embodiment of the present invention is provided above the crescent chain conveyor 5 along the straight paths 7a. More specifically, the crescent chain conveyor 5 makes a U·turn at the end of the straight paths 7a and returns in the direction from which it came in each straight path 7a, and a pair of straight paths for preordered items is provided above these. That is to say, in the present embodiment, three pairs of conveying paths for preordered items are provided above the straight paths 7a.

Foods and drinks are placed (supplied) on the continuous path in the continuous foods and drinks conveying device 4 and the conveying paths for preordered items in the conveying devices 10 for preordered items mainly within the kitchen area 2, so that the foods and drinks are conveyed along the respective paths and served to customers in the front area 3. Here, foods and drinks F1 can be placed on the continuous foods and drinks conveying device 4 at random within the kitchen area 2, while foods and drinks F2 prepared after an order is placed by a customer at a seat 9 are placed mainly on the conveying device for preordered items 10 and served to the customer who placed the order through the conveying device for preordered items 10 along which the customer is sitting.

Next, the structure of the conveying device for preordered items 10 is described below in detail in reference to FIGS. 2 to 4. Here, a pair of conveying devices for preordered items 10 is provided above the two sides of the path, but the two have the same structure, and therefore, only one is described, and the other is not described in detail.

The conveying device 10 for preordered items is a conveying device for conveying foods and drinks when a conveyance tray 11 (see FIG. 2), which is a moving body on which sushi plates D where foods and drinks, such as sushi (preordered items) can be placed, is placed moves, and is formed mainly of a conveyance tray 11, a drive unit 12, which is a drive portion running in the longitudinal direction of the path 12 along which the conveyance tray 11 travels, a movable body 50 of which one end is provided in the drive unit 13 so that it moves when driven by the drive unit 13, and a movable body side magnet 51 and a tray side magnet 52 that form a connection means for connecting the movable body 50 to the conveyance tray 11.

The drive unit 13 is a conveyor unit formed of: drive parts, including at least a conveyance motor, not shown, a drive roller (not shown), which is a rotational body connected to the conveyance motor, a follower roller (not shown), which is a rotational body that is not linked to the above described conveyance motor, and a conveyor belt 15 (see FIG. 4), which is a closed belt that is wound around the drive roller and the follower roller; and a case member 16, in which these drive parts are integrated and combined. Here, the conveyance motor (not shown) of the drive unit 13 is connected to a control device, not shown, so as to be driven under control.

As shown in FIG. 4, the case member 16 is formed of a pair - left and right - of side plates 17a and 17b that run in the direction in which foods and drinks are conveyed, a connection bolt and nut for connecting the two side plates 17a and 17b, and a support 19 that is located beneath the two side plates 17a and 17b, and is in box form with an open top. The above described drive roller and follower roller are provided at the two ends of the two side plates 17a and 17b in the longitudinal direction in such a manner as to be freely rotatable around horizontal axes (not shown), and a conveyor belt 15 made of a synthetic resin runs around the drive roller and the follower roller, and thus, the conveyor belt 15 rotates in the longitudinal direction when the conveyance motor, not shown, is driven.

Belt containing members 20 and 20 having a cross section in upward-facing square C shape run in the longitudinal direction above and beneath the connection bolt and nut 18 between the two side plates 17a and 17b, so that the conveyor belt 15 can be contained in these upper and lower belt containing members 20 and 20.

Thus, the case member 16, which runs in the longitudinal direction, which is the direction in which foods and drinks are conveyed, and inside which the drive parts are integrated, and combined and contained, is located above the crescent chain conveyor 5 at a predetermined height, as shown in FIGS. 2 and 3. Concretely, a number of pillars 21 with brackets 22 in approximately L shape fixed at the top are provided at predetermined intervals in the direction in which foods and drinks are conveyed between the two paths in the straight paths 7a, on top of the base 7, and the case members 16 are fixed to the bent portions of the brackets 22 provided at predetermined intervals with screws, not shown, with the support 19 provided on top.

A plate for preventing items from falling off 33 formed of a transparent acryl plate (see FIG. 4) is provided on the top surface of the brackets 22 so as to run in the longitudinal direction of the path 12, and the conveyance tray 11 travels over the top surface of this plate for preventing items from falling off 33. The plate for preventing items from falling off 33 is provided so that foods and drinks can be prevented from falling off and onto foods and drinks F1 moving along the continuous path in the continuous foods and drinks conveying device 4 below, or onto the continuous path.

In addition, as shown in FIGS. 2 and 4, a guide wall 32 directed upward and downward is provided outside the plate for preventing foods and drinks from falling off 33, so that it can prevent the conveyance tray 11 from falling off from the path 12. That is to say, the guide wall 32 forms the guide portion of the present invention and guides the conveyance tray 11, which is the moving body in the direction in which foods and drinks are conveyed.

Partitions 23 are provided between the pillars 21 and 21 in order to separate customers' seats 9 on opposite sides, and customers on one side can thus be prevented from taking foods and drinks F2 conveyed by the conveying device for preordered items 10 on the other side by mistake. In addition, lateral frames 24 are provided on top of the pillars 24 in the direction perpendicular to the direction in which foods and drinks are conveyed, and a shelf plate 25 on which dishes, such as teacups, and seasoning can be placed, and an illumination device 26 for illuminating the path are provided on top of the lateral frames 24.

The upper end of the movable plate 53 that forms the movable body 50 is attached to a portion of the conveyor belt 15 in the longitudinal direction. Concretely, the movable plate 53 is attached to a predetermined portion of the conveyor belt 15 on the top surface exposed from the top of the case member 16 with a bolt 29 together with an inner guide plate 27 having a cross section in approximately L shape of which a portion slides along the inner surface of the side plate 17a, and thus can move back and forth in the longitudinal direction of the case member 16; that is to say, in the direction in which foods and drinks are conveyed, when the conveyor belt 15 rotates. Here, a cover member 54 is provided in the case member 16 so as to run in the longitudinal direction and cover the opening at the top of the case member 16 and the movable body 50 from the top, so that the conveyor belt 15 cannot be directly touched with the hand, and thus is safe, and at the same time, dust and the like can be prevented from entering the drive unit 13.

Here, as shown in FIG. 4, the inner guide plate 27 is provided in the proximity of the inner surface of the upper portion of the side plate 17a, and a sliding surface 28a is provided in the proximity of the surface in the upper portion of the movable plate 53 facing the side plate 17a, so that the upper portion of the side plate 17a is sandwiched between the inner guide plate 27 and the upper portion of the movable plate 53, and thus, the inclination of the movable body 50 resulting from the load of the conveyance tray 11 can be regulated when the inner guide plate 27 and the movable plate 53 slide against the side plate 17a.

The movable body 50 has a movable plate 53 of which the upper end is attached to the conveyor belt 15 and the movable body side magnet 51. As shown in FIGS. 4 and 5, the movable plate 53 is made of a metal plate that bends down and hangs from the conveyor belt 15 in the upper portion of the drive unit 13, and the movable body side magnet 51 in disc form is secured at the center in the front-rear direction (left-right direction in FIG. 5) in the lower portion of the hanging piece 53a formed in the lower portion of the metal plate with a bolt and nut 59 so as to face the conveyance tray 11.

Thus, the movable body side magnet 51 is secured to the surface of the hanging piece 53a facing the conveyance tray 11, so that the side 51a that forms the connection surface is provided in the longitudinal direction, parallel to a vertical line.

In addition, guide members 55a and 55b for preventing the movable body side magnet 51 and the conveyance tray 11 from making contact are provided horizontally on the side of the movable body side magnet 51 in the front-rear direction. The guide members 55a and 55b are made of a synthetic resin material that is long in the front-rear direction, and guide member inclining surfaces 57 and 57 which incline in the direction of the width of the path 12 are formed in the front end portion of the guide member 55a and the rear end portion of the guide member 55b. In addition, hanging piece inclining surfaces 58 and 58 that extend to the guide member inclining surfaces 57 and 57 are formed in the front and rear end portions in the hanging piece 53, so that the pair of guide member inclining surfaces 57 and 57 and hanging piece inclining surfaces 58 and 58 in the front and rear form guide surfaces for guiding the conveyance tray 11 in the direction of connection in the front and rear end portions of the movable body 50.

In addition, the surface 55c of the guide members 55a and 55b facing the conveyance tray 11 is provided on approximately the same plane as the side 51a of the movable body side magnet 51, and therefore, the movable body side magnet 51 and the conveyance tray 11 can be prevented from making contact.

As shown in FIGS. 4 and 5, the conveyance tray 11 has a base 40 made of a metal plate and a tray cover 41 that is secured so as to cover the top surface of the base 40. The base 40 is formed in approximately rectangular form as viewed from the top, and the four corners on the bottom are provided with rollers 42 that roll over the top surface of the path 12 and support the load of the conveyance tray 11. A tray side magnet 52 that is attracted to the mobile side magnet 51 is provided between the pair of rollers 42 and 42 in the front and rear on the drive unit 13 side.

Like the mobile body side magnet 51, the tray side magnet 52 is in disc form, and secured to the surface facing the mobile body side magnet 51 in the bracket 43 hanging from the bottom surface of the base 40 with a bolt and nut 44. Thus, the tray side magnet 52 is secured to the surface facing the conveyance tray 11 in the bracket 43 so as to be provided in a longitudinal position along which the side 52a that forms the connection surface is parallel to a vertical line.

In addition, the tray side magnet 52 is provided at the same height as the mobile body side magnet 51, that moves horizontally in the longitudinal direction of the path at a predetermined height from the top surface of the path 12 when the conveyor belt 15 rotates. In addition, the tray side magnet 52 and the mobile body side magnet 51 are provided so as to attract each other through magnetic force between the side 52a and the side 51a, that is to say, they are provided so that the S pole and the N pole face each other, and therefore, the side 52a of the tray side magnet 52 and the side 51a of the mobile body side magnet 51 face each other so as to attract each other. That is to say, when the side 52a and the side 51a stick to each other through magnetic force between the tray side magnet 52 and the mobile side magnet 51, the mobile body 50 and the conveyance tray 11 are connected.

In addition, four recesses 11a in circular form as viewed from the top are created on the top surface of the tray cover 41 at predetermined intervals in the direction in which the moving body moves, so that sushi plates D can be placed on top.

Next, the operation of the thus formed conveying device for preordered items 10 is described on the basis of the diagrams. First, as shown in FIGS. 2 and 4, the drive unit 13, which is a drive portion, and a conveyance tray 11, which is a moving body, are provided side by side on the left and right side in the direction in which foods and drinks are conveyed, that is to say, in the direction of the width of the path 12 of the conveyance tray 11.

Concretely, as shown in FIG. 4, the drive unit 13 is provided on the bent portion side in the bracket 22 (right side in FIG. 4), while the conveyance tray 11 is provided on the customer side of the drive unit 13 (left side in FIG. 4). That is to say, the drive unit 13 is provided on the side of the path 12 for the conveyance tray 11 opposite to the side 35 from which foods and drinks F2 placed on the conveyance tray 11 can be taken off, and therefore, the drive unit 13 is provided on the rear side of the conveyance tray 11 as viewed from the customer side, and therefore, the drive unit 13 is not in the way when a customer removes the foods and drinks F2, and is highly safe.

In the thus formed conveying device for preordered items 10, the conveyance tray 11 is basically on standby at the end of the path 12 for the conveying device for preordered items 10 on the kitchen area 2 side. The conveyance tray 11 and the movable body 50 are connected via the tray side magnet 52 and the mobile body side magnet 51. In addition, foods and drinks ordered by a customer are prepared in the kitchen area 2, a sushi plate D on which the foods and drinks F2 are placed is placed on the conveyance tray 11, and the cook carries out a predetermined operation for conveyance so that the drive unit 13 drives the conveyor belt 15 so that it rotates, and the movable body 50 moves along the path 12 as the conveyor belt 15 rotates. When the movable body 50 moves, the conveyance tray 11 that is connected to the movable body 50 moves to the front area 3 (in the direction of the solid arrows in FIGS. 2 and 3).

The conveyance motor in the drive unit 13 is connected to a control portion, not shown, and the amount of drive, that is to say, the distance of conveyance, is controlled by the control portion through the predetermined operation for conveyance by the cook, as described above, and thus the drive stops when the conveyance tray 11 reaches the seat 9 where the customer who placed the order is sitting, and as a result, the conveyance tray 11 stops at the seat 9 where the customer who placed the order is sitting (see FIG. 3).

In addition, when a detection sensor, not shown, detects that the customer has removed the foods and drinks from the conveyance tray 11, or the customer operates a button for signaling that removal is complete, not shown, the drive unit 13 starts driving the belt again so that it rotates backward, and the empty conveyance tray from which the foods and drinks were removed travels in the opposite direction along the path 12 (direction of single-dot chain line arrows in FIGS. 2 and 3) and returns to the kitchen area 2. That is to say, the conveyance tray 11 is provided so as to move forward and backward along the path 12.

Next, the operation in a case where the conveyance tray 11 is interfered with by something, for example when the conveyance tray 11 is stopped by some obstacle on the path 12, or by a customer's hand, is described in reference to FIGS. 6 and 7. As shown in FIG. 6A, in the case where the conveyance tray 11 traveling along the path 12 as the movable body 50 moves is touched by a customer's hand, for example, and a force stronger than the attraction between the tray side magnet 52 and the movable body side magnet 51 is applied to the conveyance tray 11, the tray side magnet 52 and the movable body side magnet 51 become disconnected even as the movable body 50 keeps moving as it is driven by the drive unit 13.

That is to say, in the case where the conveyance tray 11 is interfered with by a predetermined load or more, the tray side magnet 52 and the movable body side magnet 51 become disconnected, so that the connection between the movable body 50 and the conveyance tray 11 is broken, and only the movable body 50 keeps moving (see FIG. 6B). Accordingly, in the case where the conveyance tray 11 is interfered with, no strong load is applied to the drive motor in the drive unit 13, and therefore, the drive motor can be prevented from breaking, and in addition, the customer's hand is not pulled by the conveyance tray 11, and thus the conveying device is highly safe.

In addition, guide members 55a and 55b are provided in the front and rear of the side 51a of the movable body side magnet 51, and therefore, in the case where the tray side magnet 52 and the movable body side magnet 51 that form the connection portion provided between the movable body 50 and the conveyance tray 11 become disconnected, so that only the movable body 50 keeps moving, a guide surface that spreads in the front-rear direction is formed of the surface 55c facing these guide members 55a and 55b, and thus, there is no risk of the side of the conveyance tray 11 sliding against the movable body 50 and getting caught by the movable body 50 and dragged along.

In addition, even in the case where the conveyance tray 11 is disconnected from the movable body 50, the left and right sides of the path 12 in the direction of the width are guided by the drive unit 13 and the guide wall 32, and therefore, the front, and the rear of the conveyance tray 11 can be prevented from inclining greatly in the direction of the width of the path 12 (see FIG, 6B), and the conveyance tray 11 can be prevented from falling off the side of the path 12 through which foods and drinks are taken off.

In the case where the conveyance tray 11 is disconnected from the movable body 50, it is necessary for the staff to reconnect the tray side magnet 52 and the movable body side magnet 51 after checking the safety, and in such a case, as shown in FIG. 7A, the movable body 50 can be moved in the opposite direction by rotating the conveyor belt 13 in reverse so that the tray side magnet 52 and the movable body side magnet 51 face each other when they again stick to each other through magnetic force, and thus, the movable body 50 and the conveyance tray 11 can be connected.

Here, when the movable body 50 comes close to the conveyance tray 11, the end portion of the conveyance tray 11 that protrudes from the movable body 50 side slides against the inclining surface 57 or 58 on the guide member 55ab side and is pushed out to the opposite side, and furthermore, is guided by the facing surface 55c so as to be in a traveling state, and therefore, the tray side magnet 52 and the movable body side magnet 51 can be easily attracted to each other.

Thus, in the present embodiment, a complicated control is not necessary such that the drive of the drive unit 13 is stopped in the case where the tray side magnet 52 and the movable body side magnet 51 are disconnected and the connection is broken, and safety can be secured through disconnection.

Here, though in the present embodiment drive and control in the case where the connection is broken are not described specifically, in the case where the tray side magnet 52 and the movable body side magnet 51 are disconnected and the connection is broken and then reconnected, the movable body 50 may not stop when moved in the opposite direction so as to return to the conveyance tray 11, and instead it may move gradually at a speed lower than usual, for example, so that reconnection is made through magnetic force.

In addition, a sensor means for sensing that the tray side magnet 52 and the movable body side magnet 51 are disconnected and the connection is broken may be provided so that the movement of the movable body 50, that is to say, the drive of the drive unit 13, may be stopped when the connection is broken, and thus, the movable body 50 can be prevented from moving by itself, and therefore, safety is increased.

Furthermore, an alert means for alerting that the connection is broken in the case where the tray side magnet 52 and the movable body side 51 are disconnected and the connection is broken so that the staff can respond instantly.

As described above, in the conveying device for preordered items 10 according to an embodiment of the present invention, the conveyance tray 11, which is a moving body, travels when the movable body 50 is moved by driving the drive unit 13, which is a drive portion, and at the same time, no path is provided between the conveyance tray 11 and the drive unit 13, and therefore, the tray side magnet 52 and the movable body side magnet 51, which are a connection means, allow the conveyance tray 11 to be connected directly to the movable body 50 so that the conveyance tray 11 can travel stably. In addition, in the case where the conveyance tray 11 is stopped by a certain factor, for example, being caught by an obstacle dropped on the path 12 or caught by a hand, the connection between the movable body 50 and the conveyance tray 11 is broken so that no great load is applied to the drive unit 13, and thus, the drive unit 13 can be prevented from being damaged.

Furthermore, the conveyance tray 11 and the drive unit 13 are provided in parallel in the direction of the width of the path 12, which makes it unnecessary to provide the drive unit 13 beneath the path 12, and therefore, the structure of the path 12 can be simplified, and in addition, foods and drinks, such as rice grains, mounted on the conveyance tray 11 can be prevented from dropping onto the drive unit 13 and causing damage to the drive.

In particular, the drive unit 13 is provided on the side opposite to the side 35 from which foods and drinks mounted on the conveyance tray 11 are taken off, that is to say, on the rear side relative to the conveyance tray 11 on the path 12 as viewed from a customer, and therefore, the drive unit 13 does not interfere when foods and drinks are taken off, and in addition, safety is increased.

In addition, the drive unit is formed of drive parts including a drive roller that rotates by means of a drive motor or the like, not shown, a follower roller and a conveyor belt 15 which goes around the drive roller and the follower roller and to which a movable body 50 is attached, and a casing member 16 to which the drive parts are integrated and combined so that the drive parts are combined to the casing member 16 as a unit, and therefore, the drive unit 13 can be easily provided to the side of the path 12 by simply being placed on the brackets 22. In addition, the conveying device for preordered items 10 can be simply provided as an attachment to the base 7 on which only the continuous foods and drinks conveying device 4 is provided in advance.

In addition, the path 12 (conveying path for preordered items) in the conveying device for preordered items 10 is provided along the continuous path above the crescent chain conveyor 5 (continuous path) of the continuous foods and drinks conveying device 4, and therefore, the continuous foods and drinks conveying device 4 and the conveying device for preordered items 10 can both be used to efficiently convey foods and drinks, and in addition, customers other than the customer who placed the order can be prevented from mistakenly removing the preordered foods and drinks F2, which can be supplied to the customer who placed the order without fail. In addition, the continuous path and the path for preordered items can be provided on top of each other, so that the space is used efficiently.

In addition, the connection means for connecting the movable body 50 to the conveyance tray 11 is formed of a tray side magnet 52 and a movable body side magnet 51, which are magnetic bodies for connecting the movable body 50 to the conveyance tray 11 through magnetic force, and therefore, connection and disconnection are possible through a simple mechanism.

In addition, the drive control means, not shown, drives and controls the conveyance tray 11 so that it moves back and forth along the path 12, and the sides 51a and 52a, which are the connection surfaces of the tray side magnet 52 and the movable body side magnet 51, are provided approximately parallel in the direction in which the conveyance tray 11 moves, and thus, the sides 51a and 52a can be prevented from interfering with each other, so that the conveyance tray 11 is not dragged along when the connection with the conveyance tray 11 is broken, and in addition, the conveyance tray 11 is easy to reconnect, by moving it along the path 12.

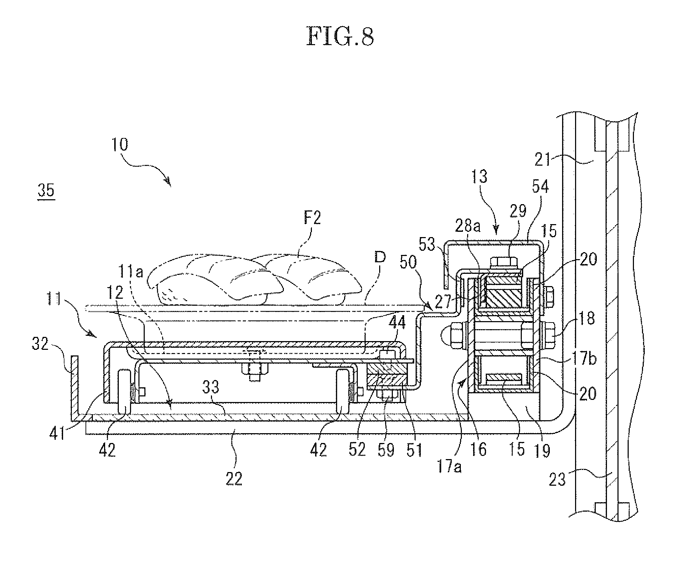

In addition, though in the present embodiment, the sides 51a and 52a, which are the connection surfaces of the tray side magnet 52 and the movable body side magnet 51, are approximately parallel in the direction in which the conveyance tray 11 moves, and attached to a vertical surface so as to be provided in the longitudinal direction, they may be provided in a lateral direction on a predetermined horizontal surface, as shown in FIG. 8, for example.

In addition, though in the present embodiment, the connection means for connecting the movable body 50 to the conveyance tray 11 is formed of a tray side magnet 52 and a movable body side magnet 51, which are magnetic bodies for connecting the movable body 50 to the conveyance tray 11 through magnetic force, the present invention is not limited to this, and the connection means may be formed of an engaging means instead of magnetic bodies, for example.

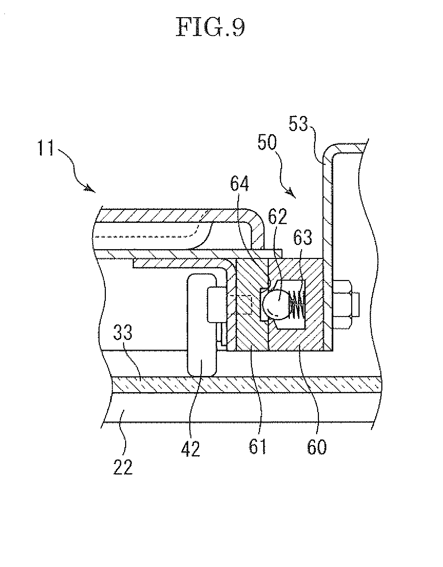

Concretely, as shown in FIG. 9, for example, an engaging body 60 that is provided on the movable body 50 side is provided with an engaging ball 62 that can freely engage with an engagement hole 64 created in an enraged body 61 provided on the conveyance tray 11 side, so that the engaging ball 62 is in such a state as to be pressed in the direction in which it protrudes by means of a spring 63, and can freely pop in and out from the surface facing the conveyance tray 11, and thus, the conveyance tray 11 and the movable body 50 can be connected and disconnected when the engaging ball 62 engages and disengages with the engaging hole 64.

Though embodiments of the present invention are described in reference to the drawings, the concrete structure is not limited to these embodiments, and the present invention includes modifications and additions that adhere to the scope of the present invention.

Though the conveyance apparatus for preordered items 10 in the above described embodiments is provided above the continuous path in the continuous foods and drinks conveying device 4, it may be provided beneath or to the side of the continuous foods and drinks conveying device 4, or anywhere where the continuous foods and drinks conveying device 4 does not get in the way.

In addition, though the conveying device for preordered items 10 in the above described embodiments is provided in the front area 3, so that preordered foods and drinks F2 can be conveyed and supplied to the customer who placed the order, it is not limited to being used for conveying preordered foods and drinks F2, and it may be used as a conveyance apparatus for supplying foods and drinks from cook to cook, for example.

In addition, though the connection portion made up of a movable body side magnet 51 and a tray side magnet 52 is provided between the movable body 50 and the bracket 43 of the conveyance tray 11 as a connection means, the arrangement of the connection portion can be freely changed between the movable body 50 and the conveyance tray 11, and the connection portion may be provided at the point where the movable body 50 is attached to the conveyor belt 15, for example.

In addition, though the connection means is formed of the movable body side magnet 51 and the tray side magnet 52 in the above described embodiments, a magnet may be provided on one of the movable body or the conveyance tray 11 and a metal piece or the like on the other, and part of the base 40 made of a metal in the conveyance tray 11 may be used to attract the movable body side magnet 51, for example.

In addition, though in the above described embodiments, the drive unit 13, which is a drive portion, is a belt conveyor formed of a motor, a drive roller, a follower roller and a conveyor belt, the form of the drive portion can be changed in various manners, as long as it can move the connection member in the direction in which foods and drinks are conveyed, for example it may be a chain conveyor made of a motor, a drive sprocket, a follower sprocket and a conveyor chain.

In addition, though in the above described embodiments, the conveyance tray 11 and the drive unit 13 are provided in parallel in an approximately horizontal direction, the drive unit 13 may be provided on only one slide - left or right - of the path 12 in the direction in which foods and drinks are conveyed, or the drive unit 13 may be provided on the two slide - left and right - or only on the side 35 from which foods and drinks are removed. Furthermore, the height of the drive unit 13 is not limited to being approximately the same as the conveyance tray 11, as long as the drive unit 13 is provided to the side of the path 12, and it may be provided above or beneath the conveyance tray 11.

In addition, though in the above described embodiments, the conveyance tray 11 moves along the path 12 via left, right, front and rear rollers 42, so that the load is supported by these rollers 42, the pair of rollers 42 in the front and rear on the drive unit 13 side are not absolutely necessary, and the conveyance tray 11 may be supported by the drive unit 13 on one side without any rollers 43.

In addition, though in the above described embodiments, foods and drinks F1 and F2 placed on the sushi plate D are sushi in the description, the present invention is not limited to this, and the foods and drinks placed on the sushi plate D may be other foods and drinks, such as juice, beer, bowls or pickles. Furthermore, though the moving body is formed as a tray, the form can be changed in many ways, as long as foods and drinks can be placed on top.

## Claims

1. A conveying device for moving a moving body on which foods and drinks can be placed and conveying foods and drinks, comprising:
a drive portion that runs along the side of a path along which said moving body travels;
a movable body that moves when driven by said drive portion; and
a connection means for connecting said movable body to said moving body, **characterized in that**
said connection means is formed so that the connection between said movable body and said moving body can be broken when said moving body is interfered with.

2. The conveying device according to Claim 1, **characterized in that** said connection means includes a magnetic body for connecting said movable body to said moving body by means of magnetic force.

3. The conveying device according to Claim 2, **characterized in that**
said moving body comprises a drive control means for controlling the drive of said drive portion so that said moving body moves back and forth along said path, and
the surface for connection on said connection means is approximately parallel to the direction in which said moving body moves.

4. The conveying device according to Claim 3, **characterized in that** a surface that inclines in the direction of the width of said path is provided to the side of said surface for connection in the direction in which the moving body moves.

5. The conveying device according to any of Claims 1 to 4, **characterized in that** a guide portion for guiding said moving body in a certain direction is provided along said path.
